# EUROPEAN PATENT APPLICATION

(11) **EP 2 597 388 A2**
(43) Date of publication of application: **29.05.2013**
(21) Application number: 12007901.7
(22) Date of filing: 22.11.2012
(51) Int. Cl.: F24F 11/00, F24F 12/00, F24F 7/08

(54) **Ventilation unit, ventilation system and method for ventilating a building**

(30) Priority: 25.11.2011 BE 201100686
(71) Applicant: Aeropulmo, besloten vennotschap met Beperkte aansprakelijkheid, 2900 Schoten (BE)
(72) Inventor: Frencken, Gunter, 2520 Ranst (BE)
(74) Representative: Donné, Eddy

(57) **Abstract**

A ventilation unit (4) for a building that comprises means (14) for the forced air supply from outside the building via a supply channel (11) to the building and means for forced air extraction (15) from the building via an exhaust channel (12), whereby the supply channel (11) and exhaust channel (12) are linked together to enable heat exchange by means of a heat exchanger (13), characterised in that the ventilation unit (4) is equipped with switching means (19) to selectively switch the forced air supply means (14) on and off, if the forced air extraction means (15) are operating.

## Description

The present invention relates to a ventilation unit, a ventilation system and method for ventilating a building or part thereof.

Modern houses, but also other buildings such as classrooms, offices, production areas and showrooms, need a forced ventilation system because they are built to be relatively airtight for energy reasons. They are needed to prevent the accumulation of impurities, with the resulting potential health problems, and the accumulation of moisture that would result in possible mould formation. Different systems are known for this purpose.

For example a system is known in which a ventilation unit extracts air from a house in one or more places, whereby fresh air flows in through ventilation openings, for example above the windows, and in this way fresh air comes into the house.

The quantity of air that has to flow in per room can easily be varied here, as early as during the design phase, by providing larger or smaller ventilation openings, and/or during the use of the house, by making these ventilation openings closable and/or adjustable.

This system is known as 'System C' in Europe.

A system of balanced ventilation with heat recovery is also known.

Balanced ventilation means that there are two separate channels for air, each with its own fan, one channel of which is for the air outlet from the house, and the other for the supply of fresh air.

A ventilation unit for balanced ventilation normally consists of a housing, affixed in the house, in which there is a supply channel with a fan and an exhaust channel with a fan, as well as a controller, and to which pipes can be attached for the supply and extraction of air via openings through the shell of the house, and for the distributed supply or extraction of this air at various places in the house.

The house is hereby not constructed with additional ventilation openings in order to prevent the balanced operation being disturbed.

A disadvantage of such a balanced ventilation unit without heat recovery is that a relatively large amount of energy is lost from the house, because in winter cold air is brought into the building and heated air is extracted from the house.

A known solution to this is to provide a heat exchanger between the two channels, so that the warm outgoing air heats the cold incoming air. This heat exchanger is also placed in the ventilation unit.

This system of balanced ventilation with heat recovery is known as 'System D' in Europe.

There are many different specific embodiments of both system C and system D on the market.

The great advantage of system D compared to system C is in the winter months, specifically due to the heat recovery via the heat exchanger. As a result the energy consumption for heating the home is reduced by a very high degree.

In the summer months however, system C has advantages compared to system D, because with system C only one fan is required compared to two fans in system D, which saves electrical energy; because the individual control of the incoming quantity of ventilation air per room is simpler and more direct; because this quantity of air comes in spread over a larger area and thus causes less significant, potentially inconvenient, air flows with the accompanying loss of comfort; and because system C is less disrupted by open doors and windows.

System C is also easier to build in later on, thus generally after the house or building has been built.

The purpose of the present invention is to provide a solution to at least one of the aforementioned and other disadvantages of known ventilation systems, by providing a ventilation unit for a building that comprises means for the forced air supply from outside the building via a supply channel to the building and for forced air extraction from the building via an exhaust channel, whereby the supply channel and exhaust channel are linked together to enable heat exchange by means of a heat exchanger, and whereby the ventilation unit is equipped with switching means to selectively switch the forced air supply means on and off, if the forced air extraction means are operating.

Such a ventilation unit can, depending on what is most desirable, operate as a system D ventilation unit, or a system C ventilation unit, whereby the benefits of both ventilation systems are combined.

As a result the user gains more comfort with lower energy consumption than the existing systems separately.

In a preferred embodiment a shutoff valve is provided in the supply channel that can be closed if the forced air supply means are switched off.

This has the advantage that an undesired air supply via the supply channel that goes through the ventilation unit, instead of via ventilation openings placed in the rooms, is avoided.

In a further preferred embodiment the switching means comprise a control unit that is equipped to determine whether one or more preconditions have been satisfied, and on the basis of this to be able to switch the forced air supply means on or off.

This has the advantage that on the basis of these data, without the necessary intervention of a user, the operation can switch between a system C ventilation unit and a system D ventilation unit.

Such preconditions can include a date and/or time, whereby the control unit can be set so that if the current date is between two limits, the forced air supply means are switched off or kept switched off, and in other cases the forced air supply means are switched on or kept switched on.

The limits here can indicate the start and end of the summer season, whereby operation as a system C has advantages.

The preconditions can also include the temperature outside the building, whereby the control unit can be equipped so that, if the temperature outside the building is above a certain limit, the forced air supply means are switched off or kept switched off, and in other cases the forced air supply means are switched on or kept switched on.

Thus, when heating is not required and heat recovery thus serves no purpose, the ventilation unit is switched to operate as a system C, and when heat recovery does serve a purpose, the ventilation unit is switched to operate as a system D.

The preconditions can also relate to a preference specified by a user of the building for an operating mode of the ventilation unit, whereby the user can adjust the operating mode to specific desires.

In a further preferred embodiment the control unit is also equipped to control the forced air supply means if they are switched on.

This also means that a combined operation is possible, whereby the operation is partly via balanced ventilation with heat recovery, and partly via ventilation openings in the rooms.

An even better adjustment of the most comfortable situation for a user of the building can be achieved in this way.

In a further preferred embodiment the control unit is also equipped to send a signal concerning the operating mode of the forced air supply means.

This can for example be a signal to a home automation system, or a system for controlling a ventilation opening. As a result, if necessary or desirable and without further intervention of the user, other systems in a building can be adjusted to the operating mode of the ventilation unit, thus as to whether it is operating as a system C or system D ventilation unit.

The invention also concerns a ventilation system for a building that comprises a ventilation unit according to any of the previous claims and a partly or completely closable ventilation opening for air supply to the building.

In a preferred embodiment, the ventilation unit and the means that make the ventilation opening closable and/or adjustable are in contact with one another to enable data exchange, whereby the ventilation system is equipped with control means that can adjust the operation of the forced air supply means according to the extent that the ventilation opening is closed, or vice versa.

As a result a central control unit in a building can automatically control both the ventilation unit and the extent to which the ventilation openings are closed, or the control unit of the ventilation unit can ensure that the extent to which the ventilation opening is closed is adjusted in the event of a change to the operation of the forced air supply means, or in the reverse a control unit that can control the extent to which the ventilation opening is closed can indirectly control the operation of the forced air supply means.

The invention also concerns a method for ventilating a building, whereby use is made of a ventilation system as described above, whereby the forced air extraction means are in operation, whereby the forced air supply means are operating or not operating depending on whether the preconditions are satisfied, and whereby, when the forced air supply means are not operating and the forced air extraction means are operating, the ventilation opening is at least partly open, and whereby additionally, when both the forced air supply means and the forced air extraction means are operating, the ventilation opening is closed. With the intention of better showing the characteristics of the invention, a preferred embodiment of a ventilation unit and a ventilation system are described and a preferred variant is described of a method according to the invention is described hereinafter by way of an example, without any limiting nature, with reference to the accompanying drawings, wherein:
figure 1 schematically shows a cross-section of a house equipped with a ventilation system according to the invention, in a first operating mode;
figure 2 shows the house of figure 1, with the ventilation system in another operating mode;
figure 3 schematically shows in more detail the part indicated by 6 in figure 1; and
figure 4 schematically shows in more detail the part indicated by 6 in figure 2.

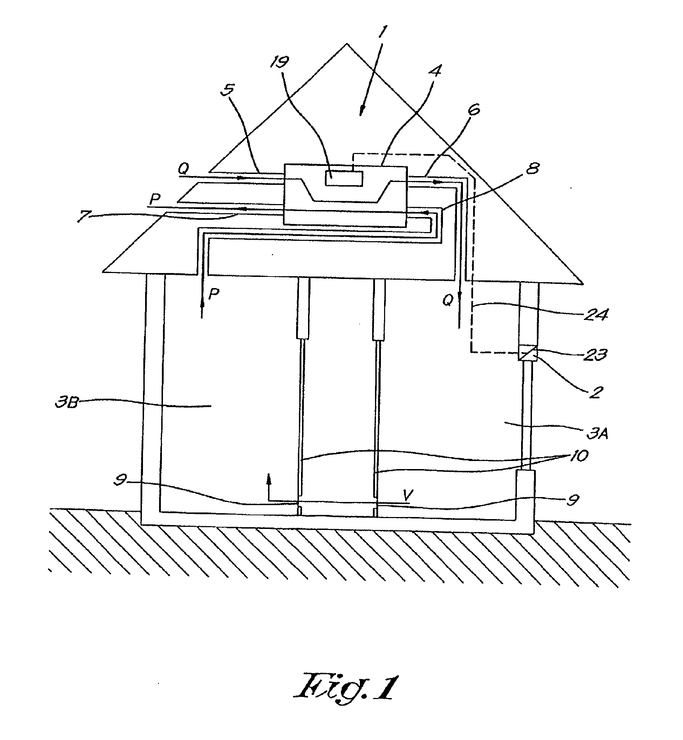

The ventilation system 1 shown in figures 1 to 4, that is integrated in a house, essentially consists of a ventilation opening 2 that is in an outside wall, above and integrated in a window, of a first room 3A, a ventilation unit 4, a set of pipes 5, 6, 7, 8, and an internal ventilation opening 9 in each of two doors 10, between the first room 3A and a second room 3B.

Pipe 5 connects the air outside the house to the ventilation unit 4, and is a pipe for the supply of fresh air. Pipe 6 connects the ventilation unit 4 to the first room 3A and is used for the transport of fresh air between the ventilation unit 4 and the first room 3A. Pipe 7 connects the ventilation unit 4 to the outside air, and is used to extract air to the outside. Pipe 8 connects a second room 11 to the ventilation unit 4 and is used for the transport of used air from the second room 3B to the ventilation unit 4.

The first room 3A and the second room 3B are connected together to enable air exchange via the internal ventilation openings 9 and a space in the house, for example a corridor.

In the ventilation unit 4 there is a supply channel 11 running between the connection points for pipes 5 and 6, and an exhaust channel 12 running between the connection points for pipes 7 and 8.

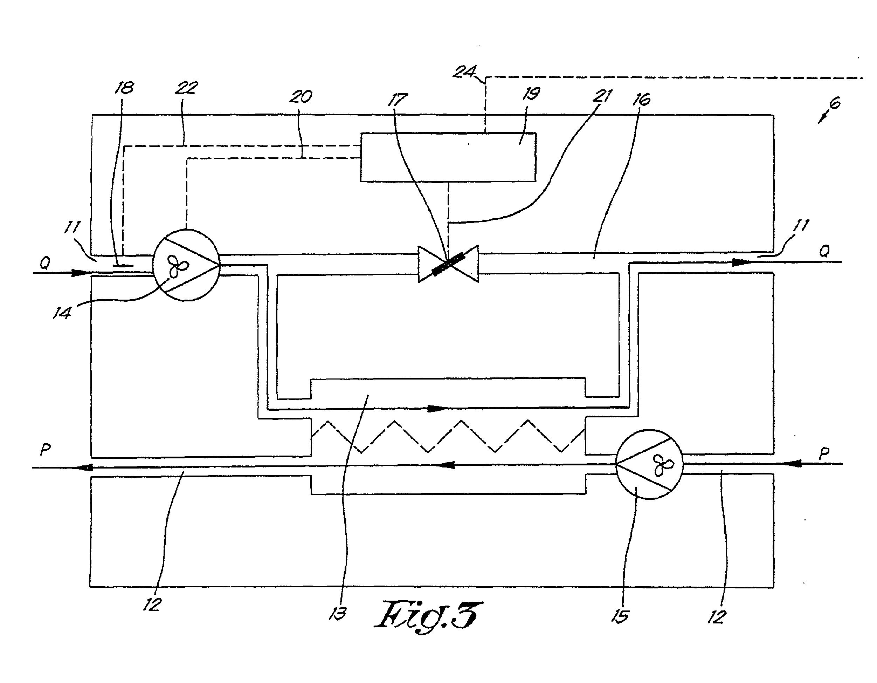

Supply channel 11 and exhaust channel 12 are linked together to enable heat exchange by means of a heat exchanger 13. The heat exchanger 13 is schematically shown in figure 3, but in reality has a form that gives a large heat-exchanging area.

In the supply channel 11 there are forced air supply means, in this case in the form of a first fan 14. In the exhaust channel 12 there are forced air extraction means, in this case in the form of a second fan 15.

On the supply channel 11 there is a bypass channel 16 that bypasses the heat exchanger 13. The bypass channel 16 is equipped with a controlled adjustable valve 17 that can open or close the bypass channel.

The supply channel 11 is equipped with a shutoff valve 18 near the first fan 14.

The first fan 14 is connected to an electronic control unit 19 via a first connection 20 so that the control unit 19 can switch the first fan on and off and control it. The control unit 19 can thereby be used as a switching means the first fan 14.

The control unit 19 is connected to the valve 17 via a second connection 21.

The control unit 19 has data exchange facilities with external systems, through which the control unit 19 can report an operating mode of the first fan 14, for example, to an external unit.

The control unit 19 is connected via a third connection 22 to the shutoff valve 18.

The ventilation opening 2 forms part of and is integrated in a window. The ventilation opening 2 is equipped with means that make the ventilation opening 2 closable, in this case a ventilation valve 23 that is connected via a fourth connection 24 to the control unit 19 of the ventilation unit 4.

Alternatively the ventilation opening 2 can also be fitted in an outside wall without forming part of a window.

The operation of the ventilation system 1 is very simple and as follows.

The ventilation system 1 is switched on. The second fan 15 is hereby set in operation, so that air is extracted from the room 3B via pipes 8 and 7, the heat exchanger 13 and the exhaust channel 12. This airflow is indicated in figures 1 to 4 with arrow P.

The control unit 19 determines whether the ventilation system 1 has to operate in a summer or winter mode. This is done by an algorithm provided in the control unit to determine whether the preconditions have been satisfied, in this example preconditions concerning the date, and more specifically by comparing the current date to two limits, which indicate a pre-imposed changeover date from summer mode to winter mode and vice versa, independently of the current weather conditions.

If the ventilation system 1 has to operate in the winter mode, which is the situation shown in figures 1 and 3, a signal is issued by the control unit 19 via a fourth connection 24 such that the ventilation valve 23 closes the ventilation opening 2.

The control unit 19 also puts the first fan 14 in operation, whereby the valve 17 is placed in a closed position and valve 18 is placed in an open position, such that air is supplied to the first room 3A via pipes 5 and 6, the heat exchanger 13 and the supply channel 11. This airflow is indicated in figures 1 and 3 by arrows Q.

Due to the airflows P and Q, an airflow V is also brought into being between the first and second rooms 3A and 3B, via the internal ventilation openings 9.

In the heat exchanger 13 this air absorbs heat from the air that simultaneously flows through exhaust channel 12, such that the fresh air is brought to the first room 3A via pipe 6 at a higher temperature than the outside temperature. In this way a large proportion of the heat removed from the second room 3B by the airflow P is brought in again with the airflow Q, whereby there is a low energy requirement in the house for heating.

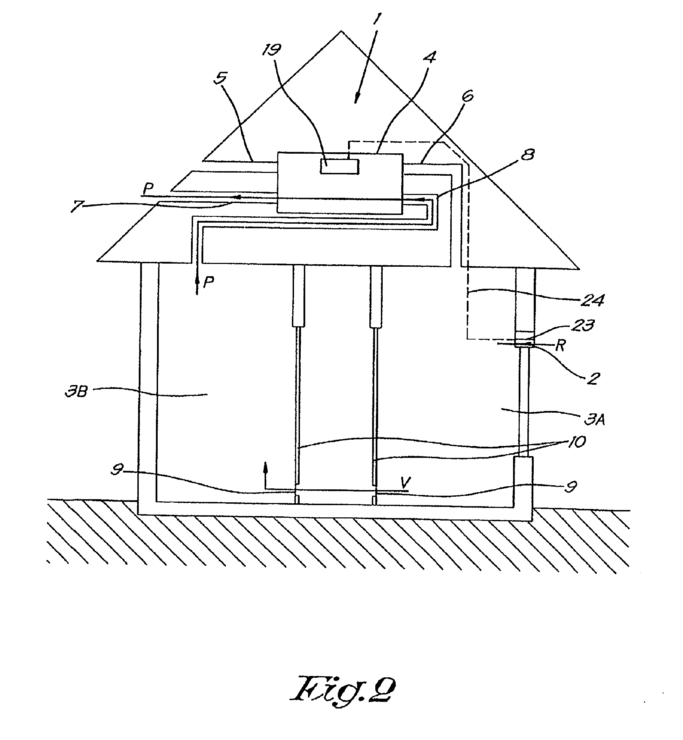

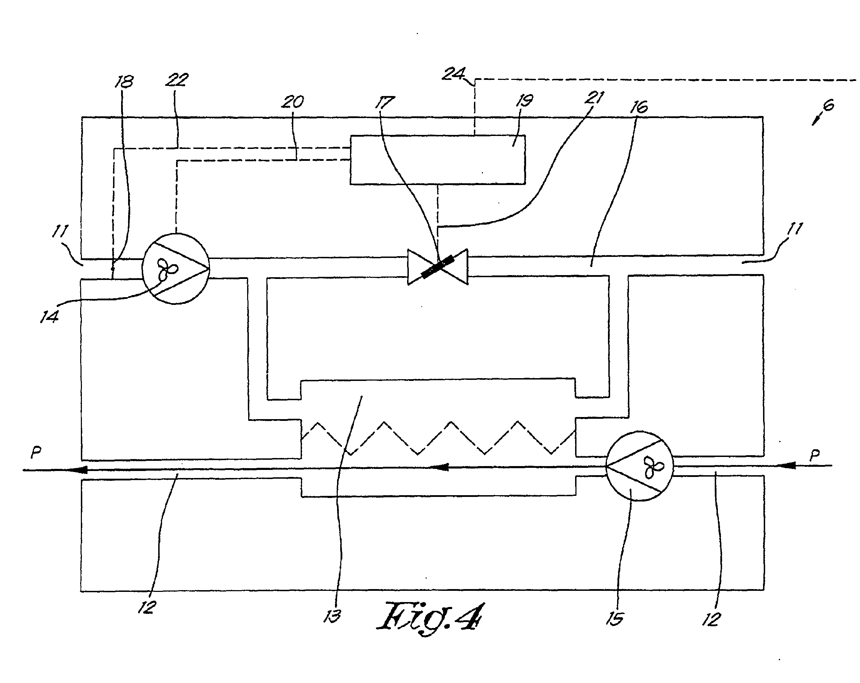

If the ventilation system 1 has to operate in the summer mode, which is the situation shown in figures 2 and 4, a signal is issued by the control unit 19 via the fourth connection 24, such that the ventilation valve 23 opens the ventilation openings 2.

The control unit 19 now switches off the first fan 14, such that the airflow Q is no longer present. At the same time the control unit 19 switches the shutoff valve 18 to a position in which it closes off the supply channel 11.

Due to the slight underpressure created in the house by the extraction of air, fresh air now flows into the house through the ventilation opening 2, as in fact there are no or hardly any openings such as cracks through the modern house. This airflow is indicated by arrow R.

If applicable valve 17 can be used, when the first fan 14 is operating, to allow air into the house by means of balanced ventilation, but without there being heat exchange with the extracted air, because the flow resistance across the bypass channel 16 is less than across the heat exchanger 13.

Also by adjusting valve 17 and thus allowing the incoming air to flow partly via the heat exchanger 13 and partly via the bypass channel 16, the temperature of the air coming into the house can be adjusted.

To this end of course the necessary temperature sensors, not shown, must be provided.

The control unit 19, which is shown above as inside the housing of the ventilation unit, can also be placed outside this housing, and/or form part of a more general control system for the interior climate of a house.

Although a control unit is described in the above example, the invention can also be implemented without a control unit. Hereby the ventilation unit only has to be equipped with a facility to switch the first fan on and off manually when the second fan is operating. The ventilation openings can also be closed and opened manually.

Although in the above example the control unit of the ventilation unit adjusts the extent to which the ventilation openings are closed as a result of adjusting the operating mode of the first fan, this can also be done the other way around, whereby a control unit of a ventilation opening issues the instruction, as a result of a change to the extent of closing, to adjust the operating mode of the first fan.

A coordinating control unit that controls the control units of the ventilation unit and the ventilation openings is also possible.

Alternatively and/or supplementary to the above description in which it is determined whether the ventilation unit has to operate in summer or winter mode on the basis of the date, other factors can also play a role in determining whether the ventilation system 1 has to operate in summer or winter mode, such as the outside temperature; a preference of a user; or a desired setting of ventilation opening control means or a home automation system.

It will be self-evident to a man skilled in the art that supplementary means such as a temperature sensor or a user interface must be provided for this purpose.

Although a purely winter or summer mode for the operation of the ventilation system is described above, a combined form is also possible in which the ventilation openings are adjustable, and whereby the first fan operates at an adapted speed between the winter operating mode and fully switched off.

The present invention is by no means limited to the embodiments described as an example and shown in the drawings, but a ventilation unit, ventilation system and method according to the invention can be realised in all kinds of variants, without departing from the scope of the invention.

## Claims

1. A ventilation unit (4) for a building that comprises means (14) for forced air supply from outside the building via a supply channel (11) to the building and means for forced air extraction (15) from the building via an exhaust channel (12), whereby the supply channel (11) and exhaust channel (12) are connected by means of a heat exchanger (13) to enable heat exchange between them, **characterised in that** the ventilation unit (4) is equipped with switching means (19) to selectively switch the forced air supply means (14) on and off when the forced air extraction means (15) are operating.

2. A ventilation unit (4) according to claim 1, **characterised in that** a shutoff valve (18) is provided in the supply channel (11),which can close the supply channel (11) if the forced air supply means (14) are switched off.

3. A ventilation unit (4) according to claim 1 or 2, **characterised in that** the switching means (19) comprise a control unit that is equipped to determine whether one or more preconditions have been satisfied, and on the basis of this to be able to selectively switch the forced air supply means (14) on or off.

4. A ventilation unit (4) according to claim 3, **characterised in that** the preconditions concern the temperature outside the building.

5. A ventilation unit (4) according to claim 4, **characterised in that** the control unit is equipped to switch off the forced air supply means (14) if the temperature outside the building is above a limit, and in other cases to switch on the forced air supply means (14).

6. A ventilation unit (4) according to any one of the claims 3 to 5, **characterised in that** the preconditions concern a preference specified by a user of the building for an operating mode of the ventilation unit (4).

7. A ventilation unit (4) according to any one of the claims 3 to 6, **characterised in that** the preconditions concern the accessibility of air to the building via other channels than the supply channel (11).

8. A ventilation unit (4) according to any one of the claims 3 to 7, **characterised in that** the preconditions concern the date.

9. A ventilation unit (4) according to claim 8, **characterised in that** the control unit is equipped to switch off the forced air supply means (14) if the current date is between two limits, and in other cases to switch on the forced air supply means (14).

10. A ventilation unit (4) according to any one of the claims 3 to 9, **characterised in that** the control unit is equipped to additionally control the forced air supply means (19), if they are switched on.

11. A ventilation unit (4) according to any one of the claims 3 to 10, **characterised in that** the control unit can also send a signal concerning the operating mode of the forced air supply means (14).

12. A ventilation system (1) for a building that comprises a ventilation unit (1) according to any of the previous claims and a partly or completely closable ventilation opening (2) for air supply to the building.

13. A ventilation system (1) according to claim 12, **characterised in that** the ventilation opening (2) is adjustable.

14. A ventilation system (1) according to claim 12 or 13, **characterised in that** the ventilation unit (4) and the means (23) that make the ventilation opening closable and/or adjustable, are in contact with one another to enable data exchange, whereby the ventilation system (1) is equipped with control means (19) that can adjust the operation of the forced air supply means (14) to the extent to which the ventilation opening (2) is closed, or vice versa.

15. A method for ventilating a building, whereby use is made of a ventilation system (1) according to any of the claims 11 to 14, whereby the forced air extraction means (15) are in operation, whereby the forced air supply means (14) are operating or not operating depending on whether the preconditions are satisfied, and whereby, when the forced air supply means (14) are not operating and the forced air extraction means (15) are operating, the ventilation opening (2) is at least partly open, and whereby additionally, when both the forced air supply means (14) and the forced air extraction means (15) are operating, the ventilation opening (2) is closed.
